# EUROPÄISCHE PATENTANMELDUNG

(11) **EP 0 691 765 A2**
(43) Veröffentlichungstag der Anmeldung: **10.01.1996**
(21) Anmeldenummer: 95109955.5
(22) Anmeldetag: 26.06.1995
(51) Int. Cl.: H04L 9/12

(54) **Verfahren zur Durchführung eines Verschlüsselungsvorganges in einem Krypto-Schaltkreis**

(30) Priorität: 05.07.1994 DE 4423565
(71) Anmelder: SIEMENS AKTIENGESELLSCHAFT, D-80333 München (DE)
(72) Erfinder: Söhne, Peter, Dr. rer. nat., D-85244 Röhrmoos (DE); Weindl, Hans-Peter, Dipl.-Ing., D-81479 München (DE)

(57) **Zusammenfassung**

Die Erfindung betrifft ein Verfahren zur Durchführung eines Verschlüsselungsvorganges in einem Krypto-Schaltkreis mit einem Algorithmus-Rechenwerk (AR) und mit einem mit dem Algorithmus-Rechenwerk (AR) direkt verbundenen Speicherbaustein (SB). Erfindungsgemäß enthält der Speicherbaustein (SB) für den Verschlüsselungsvorgang notwendige Algorithmusparameter (AP), wobei der Speicherbaustein (SB) nur einmal beschreibbar und gegen ein externes Auslesen geschützt ist.

## Beschreibung

Die Erfindung betrifft ein Verfahren gemäß dem Oberbegriff des Patentanspruchs 1.

Solch ein Krypto-Schaltkreis, wie er in dem eingangs genannten Verfahren vorgesehen ist, ist beispielsweise auf einer Krypto-Baugruppe oder einer Krypto-Card aufgebracht.

Zum Schutz von vertraulichen Kommunikationen und allgemein zur gesicherten Datenübertragung werden Verschlüsselungsverfahren eingesetzt. Hierzu wird eine Verschlüsselungsvorschrift, ein sogenannter Krypto-Algorithmus verwendet. Zur Verschlüsselung wird aus einem Klartext und einer geheimen Zusatzinformation, einem Schlüssel, ein Schlüsseltext errechnet. Zur Entschlüsselung wird aus dem Schlüsseltext und aus der gleichen bzw. einer weiteren geheimen Zusatzinformation der Klartext zurückberechnet. Durch Geheimhaltung des Krypto-Algorithmus kann eine zusätzliche Sicherheit erreicht werden.

Aus Gründen der Performance und der Manipulationssicherheit der einen solchen Algorithmus verwendenden Schlüsselgeräte wird dessen Ausführung in der Regel von einem ausschließlich zu diesem Zweck dienenden integrierten Schaltkreis, einem sogenannten Krypto-Schaltkreis realisiert. Hierdurch wird auch die Gefahr reduziert, daß ein geheim gehaltener Algorithmus von einem Angreifer ausgespäht werden kann.

Der den Schaltkreis realisierende Halbleiterhersteller kann aus den ihm zur Verfügung gestellten Materialien den Algorithmus und dessen Realisierung bestimmen und diese Information einem Angreifer zur Verfügung stellen. Alle gefertigten Schaltkreise, einschließlich der Überproduktion und der fehlerhaften Exemplare, müssen kontrolliert werden.

Dieses Problem wurde bisher dadurch gelöst, daß nur ausgewählte Halbleiterhersteller mit der Produktion solcher Schaltkreise beauftragt wurden und diese entsprechende Sicherheitsauflagen erfüllen mußten.

Der Erfindung liegt die Aufgabe zugrunde einen Krypto-Schaltkreis anzugeben, bei dessen Herstellung nicht auf den implementierten Algorithmus geschlossen werden kann.

Diese Aufgabe wird erfindungsgemäß durch die im Patentanspruch 1 angegebenen Merkmale gelöst.

Der erfindungsgemäße Krypto-Schaltkreis bietet den zusätzlichen Vorteil, daß bei geringfügigen Änderungen des Algorithmus keine vollständige Neuentwicklung des Schaltkreises notwendig ist.

Beim Krypto-Algorithmus DES ( Data Encryption Standard ) ist es bekannt, die Belegung von Substitutionsboxen nach einem Power-On in einen RAM-Speicher zu laden. Nach einem Power-Off sind diese Informationen gelöscht. Die kritischen Algorithmus-Parameter sind im Zielgerät gespeichert und werden vor jedem Einsatz in klar lesbarer Form in den Speicherbaustein geladen, können also nicht effektiv geheimgehalten werden. Zudem besteht Manipulationsgefahr.

Der Erfindung liegt die Erkenntnis zugrunde, daß zur Geheimhaltung des Algorithmus nicht der gesamte Algorithmus selbst geheim gehalten werden muß. Es reicht vielmehr, einige wenige Parameter, in der Größenordnung von 100 bis 1000 oder ein paar 1000 Bits geheim zu halten. Andererseits reicht es für eine Änderung des Algorithmus auch meistens aus, diese Bits zu variieren.

Typischerweise bestehen Krypto-Algorithmen aus linearen und nichtlinearen Bestandteilen, die im Wechsel angewendet werden. Die Stärke eines Algorithmus wird dabei im wesentlichen von den nichtlinearen Komponenten bestimmt. Typische nichtlineare Komponenten sind nichtlineare Polynome in mehreren Variablen sowie Substitutionsboxen ( beim DES-Verfahren ). Im ersten Fall sind die den Algorithmus bestimmenden Parameter die Koeffizienten der Polynome, im anderen Fall ist es die Belegung der Substitutionsboxen.

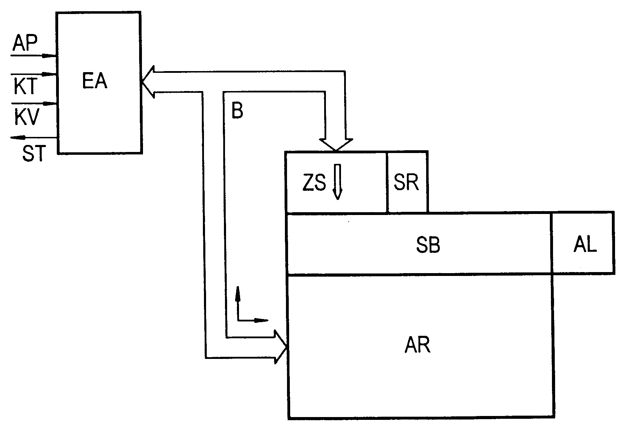

Im folgenden wird die Erfindung anhand eines in der Zeichnung dargestellten Ausführungsbeispieles beschrieben.

In der einzigen Figur sind die für das Verständnis der Erfindung notwendigen Schaltungsblöcke dargestellt.

An einem Eingabe-Ausgabebaustein EA liegen wahlweise Algorithmusparameter AP, Kryptovariable KV oder ein Klartext KT an. Weiter kann von diesem Eingabe-Ausgabebaustein EA ein Schlüsseltext ST abgegeben werden. Bei der Verschlüsselung wird in einem Algorithmus-Rechenwerk AR aus dem Klartext KT der Schlüsseltext ST berechnet. Umgekehrt wird bei der Entschlüsselung aus dem Schlüsseltext ST der Klartext KT berechnet. Zur Ver- und Entschlüsselung werden die Algorithmusparameter AP sowie eine bestimmte Kryptovariable KV verwendet.

Zur Durchführung des Verschlüsselungsvorganges, darunter ist in Zukunft auch die Entschlüsselung zu verstehen, ist der Eingabe-Ausgabebaustein EA über einen Bus B mit dem Algorithmus-Rechenwerk AR und indirekt mit einem Speicherbaustein SB verbunden. In diesem Speicherbaustein SB werden die Algorithmusparameter AP abgespeichert.

Erfindungsgemäß ist der Speicherbaustein SB direkt mit dem Algorithmus-Rechenwerk AR verbunden, so daß kein externer Zugriff auf den Datenaustausch zwischen diesen beiden Schaltungsblöcken möglich ist. Weiter ist erfindungsgemäß dem Speicherbaustein SB eine Zugriffssicherung vorgeschaltet, über die die Algorithmusparameter AP in den Speicherbaustein SB eingeschrieben werden können. Die Zugriffssicherung ZS kontrolliert den Schreibvorgang in den Speicherbaustein SB. Die Zugriffssicherung ZS enthält ein Statusregister SR. Die Zugriffssicherung ZS prüft bei einem Schreibvorgang eine in diesem Statusregister SR abgelegte Kontrollinformation, und läßt nur dann einen Schreibvorgang zu, wenn diese Information es erlaubt.

Bei der Fertigung des Krypto-Schaltkreises ist diese Kontrollinformation so vorzubelegen, daß ein Schreibvorgang möglich ist. Nach Eintrag der Algorithmusparameter AP wird die Kontrollinformation so verändert, daß kein weiterer schreibender Zugriff auf den Speicherbaustein SB möglich ist.

Der Speicherbaustein SB ist beispielsweise durch einen EEPROM-Baustein realisiert, der sich nach dem Einschreiben der Parameter AP in den Speicherbaustein SB effektiv wie ein PROM-Baustein verhält. Im folgenden hat die Zugriffssicherung ZS nur noch die Aufgabe, Schreibversuche abzuwehren. Ein Auslesen der Algorithmusparameter AP über die Zugriffssicherung ZS aus dem Speicherbaustein SB wird ebenfalls verhindert.

Dem Speicherbaustein SB ist eine Aktivierungslogik AL zugeordnet. Die Aktivierungslogik AL hat die Aufgabe, nach einem Power-on bzw. einem Reset des Krypto-Schaltkreises die Algorithmusparameter AP im Speicherbaustein SB zu aktivieren. Dazu wird zunächst die genannte Kontrollinformation im Statusregister SR betrachtet. Ist ein Schreibzugriff noch möglich, so wird verhindert, daß der Anwender irrtümlich mit einem noch nicht geladenen Speicherbaustein SB arbeitet. Daneben wird der Anwender in der Regel durch Verschlüsselung eines Probetextes unter einem Probeschlüssel nachprüfen, ob die korrekten Parameter AP geladen sind.

Bei einem mit Algorithmusparametern AP geladenen Speicherbaustein SB, welches durch eine entsprechende Kontrollinformation im Statusregister SR angezeigt wird, wird der Inhalt des Speicherbausteins SB in das Algorithmus-Rechenwerk AR gelesen und es werden daraus die Parameter des Algorithmus berechnet, die beispielsweise in einem internen RAM-Baustein des Rechenwerks AR abgelegt werden. Im einfachsten Fall besteht die Berechnung der Parameter einfach in einem Kopiervorgang vom Speicherbaustein SB in den Arbeitsspeicher. Es ist jedoch auch eine komplexere Berechnung an dieser Stelle möglich. Die Parameter AP werden in einen flüchtigen Arbeitsspeicher geladen, da dies einen schnelleren Zugriff ermöglicht.

Bei Verwendung des erfindungsgemäßen Krypto-Schaltkreises kann die Eingabe der Algorithmusparameter AP in einem besonders gesicherten Bereich mit geringem Geräteaufwand erfolgen. Da die Parameter AP diesen Bereich nur im erfindungsgemäßen Baustein, d. h. nicht auslesbar verlassen, ist die Geheimhaltung gewährleistet.

Es kann weiter vorgesehen sein, daß die Schreibberechtigung zum Einschreiben der Algorithmusparameter AP von der Erfüllung einer zusätzlichen Bedingung, etwa der Eingabe eines Paßwortes, abhängig gemacht ist.

## Patentansprüche

1. Verfahren zur Durchführung eines Verschlüsselungsvorganges in einem Krypto-Schaltkreis mit einem Algorithmus-Rechenwerk (AR) und mit einem mit dem Algorithmus-Rechenwerk (AR) direkt verbundenen Speicherbaustein (SB),
**dadurch gekennzeichnet daß**
der Speicherbaustein (SB) für den Verschlüsselungsvorgang notwendige Algorithmusparameter (AP) enthält, wobei der Speicherbaustein (SB) nur einmal beschreibbar und gegen ein externes Auslesen geschützt ist.

2. Verfahren nach Anspruch 1,
**dadurch gekennzeichnet daß**
dem Speicherbaustein (SB) eine Zugriffssicherung (ZS) mit einem Statusregister (SR) vorgeschaltet ist, wobei die Zugriffssicherung (ZS) ein einmaliges Beschreiben des Speicherbausteines (SB) erlaubt und das Statusregister (SR) zur Anzeige dient, ob dieser Vorgang durchgeführt ist.
